Europäisches Patentamt

European Patent Office

Office européen des brevets

(11) Numéro de publication : **0 305 257 B1**

# (12) FASCICULE DE BREVET EUROPEEN

(45) Date de publication du fascicule du brevet :
**01.04.92 Bulletin 92/14**

(51) Int. Cl.[5] : **F25D 19/00**, G01J 5/06,
H01L 31/02

(21) Numéro de dépôt : **88402045.4**

(22) Date de dépôt : **05.08.88**

(54) **Procédé et dispositif de refroidissement cryogénique d'un objet.**

(30) Priorité : **10.08.87 FR 8711350**

(43) Date de publication de la demande :
**01.03.89 Bulletin 89/09**

(45) Mention de la délivrance du brevet :
**01.04.92 Bulletin 92/14**

(84) Etats contractants désignés :
**BE CH DE ES FR GB IT LI NL SE**

(56) Documents cités :
**FR-A- 2 130 001**
**US-A- 3 356 846**
**US-A- 3 807 188**
**US-A- 3 836 779**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
Titulaire : **COMMISSARIAT A L'ENERGIE ATOMIQUE Etablissement à caractère scientifique , technique et industriel**
**29-33, rue de la Fédération**
**F-75015 Paris (FR)**

(72) Inventeur : **Reale, Serge**
**12, rue Hippolyte Muller**
**F-38100 Grenoble (FR)**
Inventeur : **Ravex, Alain**
**9, rue Saint Vincent/Porte La Tines/Les Béalières**
**F-38240 Meylan (FR)**

(74) Mandataire : **Le Moenner, Gabriel et al**
**L'AIR LIQUIDE, Société Anonyme pour l'étude et l'exploitation des procédés Georges Claude**
**75, Quai d'Orsay**
**F-75321 Paris Cédex 07 (FR)**

## Description

La présente invention est relative à un procédé de refroidissement cryogénique d'un objet à une température déterminée, notamment au refroidissement cryogénique des détecteurs infra-rouge, du type dans lequel on cède une puissance frigorifique produite à une masse de gaz auxiliaire et l'on refroidit l'objet par échange de chaleur avec cette masse de gaz auxiliaire.

La technique habituelle pour refroidir les detecteurs infra-rouge fonctionnant aux températures cryogéniques consiste à détendre un gaz de travail d'une haute pression de l'ordre de quelques centaines de bar à une pression voisine de la pression atmosphérique, jusqu'à obtenir un bain de liquide au contact d'un support métallique du détecteur. Un inconvénient de cette technique réside dans le fait que la température d'ébullition du liquide cryogénique obtenu dépend de la perte de charge du circuit basse pression du dispositif. De plus, il est souvent difficile de garantir que le bain de liquide reste réellement au contact du support du détecteur, par exemple lorsque le dispositif est en mouvement. Par suite, on ne peut obtenir une température froide parfaitement stable.

Le document FR-A-2 130 001 décrit un cryostat mettant en oeuvre un procédé du type rappelé ci-dessus dans lequel la masse de gaz auxiliaire est solidifiée, en équilibre avec sa vapeur, la température de la masse solidifiée étant régulée par la pression de vapeur, au moyen, notamment, d'une pompe reliée à la capacité contenant la masse de gaz auxiliaire.

L'invention a pour but de permettre d'obtenir de façon fiable, économique et compacte, une température froide déterminée parfaitement stable.

A cet effet, selon le procédé de l'invention, la masse de gaz auxiliaire est refroidie à la température de son point triple qui correspond sensiblement à la température de refroidissement déterminée.

L'invention a également pour objet un dispositif destiné à la mise en oeuvre de ce procédé. Ce dispositif, du type comprenant des moyens de production frigorifique à basse température, l'objet à refroidir étant en contact thermique avec une paroi d'une capacité thermiquement conductrice contenant une masse de gaz auxiliaire en relation d'échange thermique avec les moyens de production frigorifique, est caractérisé en ce que la capacité est fermée et contient une masse de gaz auxiliaire sous pression, dont la température du point triple correspond à la température de refroidissement déterminée.

Dans un mode de réalisation particulier de ce dispositif, les moyens de production frigorifique comprennent un circuit de gaz de travail haute pression qui se termine par des moyens de détente débouchant dans une chambre de refroidissement, et un circuit basse pression qui part de cette chambre et est en relation d'échange thermique avec le circuit haute pression, la chambre de refroidissement est délimitée par une paroi de ladite capacité, et le gaz de travail a une température d'ébullition sous la pression atmosphérique inférieure à la température du point triple du gaz auxiliaire.

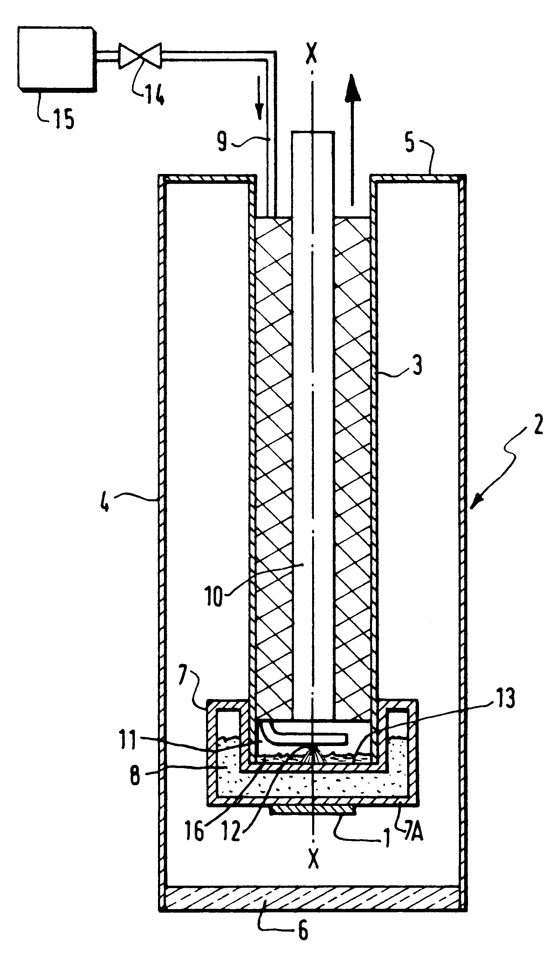

Un exemple de mise en oeuvre de l'invention va maintenant être décrit en regard du dessin annexé, sur lequel la figure unique représente schématiquement, en coupe longitudinale, un dispositif de refroidissement conforme à l'invention.

Le dispositif de refroidissement illustré au dessin est destiné à refroidir un détecteur infra-rouge 1 à une température cryogénique inférieure à 85K. Il possède un axe général X-X supposé vertical et comprend un Dewar 2 à double enveloppe comprenant lui-même :
- une enveloppe intérieure cylindrique 3 en tôle mince, à extrémité inférieure ouverte ;
- une enveloppe extérieure cylindrique 4 en tôle mince, de plus grande longueur que l'enveloppe 3 ;
- une paroi supérieure annulaire plane 4 en tôle mince, reliant l'extrémité supérieure des deux enveloppes 3 et 4 ;
- une fenêtre 6 perméable au rayonnement infra-rouge, obturant l'extrémité inférieure de l'enveloppe 4 ; et
- une capacité 7 en forme de coupelle à double paroi métallique épaisse, coiffant et obturant l'extrémité inférieure de l'enveloppe 3.

La capacité 7 contient une masse 8 d'un gaz auxiliaire dont le point triple est à une température correspondant à la température froide désirée. Dans l'exemple considéré, il peut s'agir d'argon, dont la température du point triple est 83,78K. Cette masse d'argon est stockée à température ambiante sous une pression de quelques centaines de bars pour réduire le volume de la capacité 7.

L'espace d'inter-paroi du Dewar est sous vide, et le détecteur 1 est fixé avec un bon contact thermique dans cet espace, sur la face inférieure 7A de la capacité 7.

Le dispositif comprend également un échangeur de chaleur comprenant lui-même un tube haute pression 9 bobiné sur un mandrin 10 et enfilé sans jeu dans l'enveloppe intérieure 3 du Dewar. Sous le mandrin 10 et la partie bobinée du tube 9 (schématisée par une zone hachurée) est délimitée une chambre de refroidissement 11 dans laquelle se trouve une partie terminale inférieure du tube 9, laquelle est obturée et, près de son extrémité, percée d'un orifice de détente calibré 12 disposé en regard et à faible distance de la paroi 13 de la capacité 7 qui forme le fond de la coupelle et qui obture l'enveloppe 3. Un circuit basse pression sinueux est délimité entre les spires du tube 9, le mandrin 10 et l'enveloppe 3, de la chambre 11 à l'air libre.

L'extrémité supérieure du tube 9 est reliée par l'intermédiaire d'une électrovanne 14 à une source 15 de gaz de travail sous haute pression, qui peut être par exemple un simple réservoir. Ce gaz de travail doit avoir une température d'ébullition sous la pression régnant dans la chambre 11 inférieure à la température du point triple de l'argon, et peut être par exemple de l'air, qui bout vers 79K sous la pression atmosphérique et, compte tenu de la perte de charge du circuit basse pression, à environ 81K dans la chambre 11.

En fonctionnement, on ouvre l'électrovanne 14, ce qui permet au gaz de travail haute pression de s'écouler par le tube 9, de se détendre dans la chambre 11 par l'orifice 12 et de remonter suivant le circuit basse pression pour s'échapper finalement à l'air libre, en refroidissant le gaz haute pression contenu dans le tube 9. Il se forme rapidement sur le fond 13 un bain 16 de gaz de travail liquéfié qui refroidit à volume constant l'argon contenu dans la capacité 7.

Cet argon subit ainsi un refroidissement en phase gazeuse, puis une liquéfaction progressive accompagnée d'un refroidissement, jusqu'à son point triple. Il commence alors à se solidifier et reste à la température constante du point triple tant que les trois phases gaz, liquide et solide sont simultanément présentes dans la capacité 7. A son tour, la capacité 7 refroidit le détecteur 1 et, tant que les conditions du point triple sont maintenues, ce détecteur est réfrigéré à une température parfaitement stable, de l'ordre de 84K.

Pour maintenir les conditions du point triple, on peut, à partir d'essais empiriques, définir un cycle programmé d'ouverture-fermeture de l'électrovanne 14, qui arrête l'écoulement de l'air haute pression avant la fin de la solidification de l'argon et qui fait reprendre cet écoulement avant que la phase solide ait totalement disparu. A titre indicatif, un tel cycle peut par exemple, après une mise en froid initiale de 30 secondes, comprendre des phases de fermeture de l'électrovanne de 25 secondes séparées par de courtes phases d'ouverture de l'électrovanne de 1 seconde, ce qui correspond à une faible consommation moyenne de gaz de travail et confère donc au dispositif une longue autonomie. En particulier, si l'autonomie désirée ne dépasse pas 25 secondes environ, le dispositif peut fonctionner sans aucune alimentation en gaz haute pression, après avoir stocké le maximum possible d'énergie frigorifique au point triple dans la capacité 7.

En variante, un cycle analogue peut être obtenu en commandant en tout ou rien l'électrovanne 14 par une sonde de température (non représentée) détectant toute variation de température de l'argon.

Il est à noter qu'à chaque fermeture de l'électrovanne 14, le faible volume de gaz haute pression contenu dans le tube 9 en aval de cette électrovanne se vide quasi-instantanément, et la pression régnant dans la chambre 11 devient très voisine de la pression atmosphérique. L'air liquéfié bout donc en fait à une température très voisine de sa température d'ébullition sous la pression atmosphérique.

De plus, l'accumulation de froid à température constante réalisée dans la capacité 7 permet de réfrigérer le détecteur 1 à une température rigoureusement constante indépendamment de toute fluctuation indésirable du débit du gaz de travail, due par exemple au bouchage temporaire de l'orifice de détente 12 par une particule solide.

L'invention s'applique à toutes les techniques de refroidissement cryogéniques, par exemple utilisant des machines Stirling, Vuilleumier, Gifford Mac Mahon, etc. On choisira dans chaque cas un gaz auxiliaire ayant un point triple approprié.

Par ailleurs, il est souhaitable, à chaque fois que c'est possible d'utiliser un gaz auxiliaire dont non seulement le point triple a une température cryogénique correspondant à la température froide souhaitée, mais également le point critique se situe au-dessus de la température ambiante. En effet, il est alors possible de stocker ce gaz à l'état liquide, à température ambiante, dans la capacité 7, ce qui présente deux avantages : on stocke, dans un volume donné, une masse beaucoup plus importante de gaz auxiliaire, et la pression de stockage n'a pas besoin d'être élevée, ce qui permet de réduire l'épaisseur de paroi de la capacité 7, et donc sa masse et son encombrement.

Ainsi, par exemple, pour refroidir un détecteur 1 vers 87K, on peut utiliser comme gaz auxiliaire du propane, dont le point triple est à 85,47K et dont le point critique est à 370K, ce qui permettrait un stockage en phase liquide à 300K sous 10 bars environ.

## Revendications

1. Procédé de refroidissement cryogénique d'un objet (1) à une température déterminée, dans lequel on cède une puissance frigorifique produite à une masse de gaz auxiliaire (8) et l'on refroidit l'objet (1) par échange de chaleur avec cette masse de gaz auxiliaire, caractérisé en ce que la masse de gaz auxiliaire (8) est refroidie à la température de son point triple qui correspond sensiblement à la température de refroidissement déterminée.

2. Procédé suivant la revendication 1, caractérisé en ce que l'on utilise un gaz auxiliaire dont le point critique est situé au-dessus de la température ambiante, ce gaz étant stocké sous forme liquide à la température ambiante.

3. Dispositif de refroidissement cryogénique d'un objet (1) à une température déterminée, comprenant des moyens (9,12,15) de production frigorifique à basse température, l'objet à refroidir (1) étant en contact thermique avec une paroi (7A) d'une capacité (7) thermiquement conductrice contenant une masse (8) de gaz auxiliaire en relation d'échange thermique avec les moyens de production frigorifique, caractérisé en ce que la capacité (7) est fermée et contient une masse (8) de gaz auxiliaire sous pression dont la température du point triple correspond à la température de refroidissement déterminée.

4. Dispositif suivant la revendication 3, caractérisé en ce que les moyens de production frigorifique comprennent un circuit (9) de gaz de travail haute pression qui se termine par des moyens de détente (12) débouchant dans une chambre de refroidissement (11), et un circuit basse pression qui part de cette chambre et est en relation d'échange thermique avec le circuit haute pression, en ce que la chambre de refroidissement (11) est délimitée par une paroi de capacité (7), et en ce que le gaz de travail a une température d'ébullition sous la pression atmosphérique inférieure à la température du point triple du gaz auxiliaire.

5. Dispositif suivant la revendication 4, caractérisé en ce que les moyens de production frigorifique sont disposés dans une enveloppe cylindrique (3) obturée par la capacité (7).

6. Dispositif suivant la revendication 5, caractérisé en ce que la capacité (7) forme une coupelle à double paroi coiffant l'extrémité correspondante de l'enveloppe (3).

7. Dispositif suivant l'une des revendications 3 à 6, caractérisé en ce que le gaz auxiliaire a un point critique situé au-dessus de la température ambiante et est stocké sous forme liquide à la température ambiante.

8. Dispositif selon l'une des revendications 3 à 7, caractérisé en ce que l'objet à refroidir (1) est monté sur la capacité (7).

9. Dispositif selon l'une des revendications 3 à 7, caractérisé en ce que l'objet à refroidir (1) est un détecteur infra-rouge.

**Patentansprüche**

1. Verfahren zur Kryokühlung eines Objektes (1) auf eine vorgegebene Temperatur, bei dem man eine erzeugte Kälteleistung an eine Masse eines Hilfsgases (8) abgibt und das Objekt (1) durch Wärmeaustausch mit dieser Masse des Hilfsgases abkühlt, dadurch **gekennzeichnet**, dass die Masse des Hilfsgases (8) auf die Temperatur seines Tripelpunktes abgekühlt wird, die im wesentlichen der vorgegebenen Kühltemperatur entspricht.

2. Verfahren nach Anspruch 1, dadurch **gekennzeichnet**, dass man ein Hilfsgas verwendet, dessen kritischer Punkt über der Umgebungstemperatur liegt, und dieses Gas in flüssiger Form bei Umgebungstemperatur gespeichert wird.

3. Vorrichtung zur Kryokühlung eines Objektes (1) auf eine vorgegebene Temperatur, mit Einrichtungen (9, 12, 15) zur Kälteerzeugung auf niedriger Temperatur, wobei das zu kühlende Objekt (1) in Wärmeschluss mit einer thermisch leitenden Wand (7A) eines Aufnahmeraumes (7) ist, der eine Masse (8) des Hilfsgases in Relation zum Wärmeaustausch mit den Einrichtungen zur Kälteerzeugung enthält, dadurch **gekennzeichnet**, dass der Aufnahmeraum (7) geschlossen ist und eine Masse (8) des Hilfsgases unter Druck enthält, dessen Tripelpunkttemperatur der vorgegebenen Kühltemperatur entspricht.

4. Vorrichtung nach Anspruch 3, dadurch **gekennzeichnet**, dass die Einrichtungen zur Kälteerzeugung eine Leitung (9) des unter hohem Druck stehenden Arbeitsgases enthalten, die durch eine Entspannungseinrichtung (12) abgeschlossen ist, die in eine Kühlkammer (11) mündet, und eine Niederdruckleitung, die von dieser Kühlkammer ausgeht und in einer Wärmeaustauschbeziehung mit der Hochdruckleitung steht, dass die Kühlkammer (1) durch eine Wand des Aufnahmeraumes (7) begrenzt wird, und dass das Arbeitsgas unter atmosphärischem Druck eine Verdampfungstemperatur hat, die unter der Tripelpunkttemperatur des Hilfsgases ist.

5. Vorrichtung nach Anspruch 4, dadurch **gekennzeichnet**, dass die Einrichtungen zur Kälteerzeugung in einem zylindrischen Mantel (3) angeordnet sind, der durch den Aufnahmeraum (7) abgeschlossen wird.

6. Vorrichtung nach Anspruch 5, dadurch **gekennzeichnet**, dass der Aufnahmeraum (7) einen Tiegel mit Doppelwand bildet, der das zugeordnete Ende des Mantels (3) abdeckt.

7. Vorrichtung nach einem der Ansprüche 3 bis 6, dadurch **gekennzeichnet**, dass das Hilfsgas einen kritischen Punkt hat, der über der Umgebungstemperatur liegt und bei Umgebungstemperatur in flüssiger Form gespeichert wird.

8. Vorrichtung nach einem der Ansprüche 3 bis 7, dadurch **gekennzeichnet**, dass das zu kühlende Objekt (1) auf dem Aufnahmeraum (7) montiert ist.

9. Vorrichtung nach einem der Ansprüche 3 bis 7, dadurch **gekennzeichnet**, dass das zu kühlende Objekt (1) ein Infrarotdetektor ist.

**Claims**

1. A process for the cryogenic cooling of an object (1) at a predetermined temperature, in which a refrigerating capacity produced is given up to a mass of auxiliary gas (8) and the object (1) is cooled by heat exchange with that mass of auxiliary gas, characterised in that the mass of auxiliary gas (8) is cooled to its triple point temperature which corresponds substantially to the predetermined cooling temperature.

2. A process according to Claim 1, characterised in that use is made of an auxiliary gas the critical point of which is situated above ambient temperature, this gas being stored in liquid form at ambient temperature.

3. An apparatus for the cryogenic cooling of an object (1) at a predetermined temperature, comprising means (9, 12, 15) for refrigeration at low temperature, the object to be cooled (1) being in thermal contact with one wall (7A) of a thermally conducting condenser (7) containing a mass (8) of auxiliary gas in heat-exchange relationship with the refrigeration means, characterised in that the condenser (7) is closed and contains a mass (8) of auxiliary gas under pressure the triple point temperature of which corresponds to the predetermined cooling temperature.

4. An apparatus according to Claim 3, characterised in that the refrigeration means comprise a high-pressure working gas circuit (9) which terminates in pressure-decreasing means (12) leading into a cold chamber (11), and a low-pressure circuit which leaves this chamber and is in heat-exchange relationship with the high-pressure circuit, in that the cold chamber (11) is delimited by a wall of the condenser (7), and in that the working gas has a boiling point under atmospheric pressure which is lower than the triple point temperature of the auxiliary gas.

5. An apparatus according to Claim 4, characterised in that the refrigeration means are disposed in a cylindrical envelope (3) obturated by the condenser (7).

6. An apparatus according to Claim 5, characterised in that the condenser (7) forms a double-walled cup covering the corresponding extremity of the envelope (3).

7. An apparatus according to one of Claims 3 to 6, characterised in that the auxiliary gas has a critical point situated above ambient temperature and is stored in liquid form at ambient temperature.

8. An apparatus according to one of Claims 3 to 7, characterised in that the object to be cooled (1) is mounted on the condenser (7).

9. An apparatus according to one of Claims 3 to 7, characterised in that the object to be cooled (1) is an infra-red detector.